# EUROPEAN PATENT APPLICATION

(11) **EP 4 793 681 A1**
(43) Date of publication of application: **19.08.2026**
(21) Application number: 24876569.5
(22) Date of filing: 10.10.2024
(51) Int. Cl.: G02B 6/00

(54) **OPTICAL DEVICE AND NEAR-EYE DISPLAY APPARATUS**

(30) Priority: 13.10.2023 CN 202311331529
(71) Applicant: Beijing Otix Limited, Beijing 100000 (CN)
(72) Inventor: YAN, Guanyi, Beijing 100000 (CN); JIN, Yunfeng, Beijing 100000 (CN)
(74) Representative: dompatent
(86) International application number: PCT/CN2024/123817
(87) International publication number: WO 2025/077757

(57) **Abstract**

A near-eye display apparatus, comprising an optical device (100) and a light ray generator (200), the optical device (100) comprising a light guide member (110) and a reflection surface (120); the reflection surface (120) is obliquely arranged with respect to two parallel total internal reflection surfaces (111, 112) of the light guide member (110), so as to couple light rays into the light guide member (110). A first end (O1) and a second end (O2) of the reflection surface (120) are respectively arranged on two opposite sides of the first total internal reflection surface (111); the first end (O1) and the second end (O2) of the reflection surface (120) satisfy: a light ray within an incident angle enters the optical device (100) through a light ray incident end, then is reflected once to the second total internal reflection surface (112) by the reflection surface (120), and is fully paved on the light guide member (110), the incident angle being at least 50% of the maximum incident angle; an edge light ray within the incident angle and obliquely incident to the second end (O2) of the reflection surface is reflected twice by the reflection surface (120) and then is reflected between the first end (O1) of the reflection surface (120) and the first total internal reflection surface (111), thus filtering stray light, and improving the effect of the light guide member (110) during near-eye display.

## Description

The present disclosure claims the priority to a Chinese Patent Application No. 202311331529.7, filed with the China National Intellectual Property Administration on October 13, 2023 and entitled "an optical device and a near-eye display apparatus", which is incorporated into the present disclosure by reference in its entirety.

### TECHNICAL FIELD

The present disclosure relates to a field of optical technologies, and in particular, to an optical device and a near-eye display apparatus.

### BACKGROUND

Application of different near-eye display systems such as AR (augmented reality) or VR (virtual reality) is becoming increasingly common. However, in the above near-eye display systems, users have increasingly high technical requirements for the products. Especially in the display process, the users have increasingly high requirements for the quality of displayed images. However, in the current near-eye display systems, there are still cases in which the light rays are uneven during propagation and contain stray light when the light rays propagate through the light guide member.

### SUMMARY

The present disclosure provides an optical device and a near-eye display apparatus, to improve the propagation effect of the light ray in the optical device and further improve the display effect.

The present disclosure provides an optical device, including: a light guide member and a reflection surface; where
the light guide member includes a first total internal reflection surface and a second total internal reflection surface that are parallel to each other, where the second total internal reflection surface has a light incident end and a light exit end that are opposite to each other;
the reflection surface is arranged to be oblique with respect to the first total internal reflection surface and close to the light incident end;
the reflection surface has a first end located on a side of the first total internal reflection surface away from the second total internal reflection surface and a second end is located between the first total internal reflection surface and the second total internal reflection surface, and the second end of the reflection surface is spaced from the second total internal reflection surface by a set distance;
the first end and the second end of the reflection surface meet that:
   for light rays entering the optical device via the light incident end with an incident angle, the light rays are reflected by the reflection surface once to the second total internal reflection surface and thus fully paved in the light guide member, to realize total internal reflection propagation, where the incident angle is at least 50% of a maximum incident angle; and
   for edge light rays obliquely incident to the second end of the reflection surface with the incident angle, the edge light rays are reflected by the reflection surface twice and incident to a region between the first end of the reflection surface and the first total internal reflection surface.

In the above technical solution, by arranging the reflection surface to be oblique with respect to the first total internal reflection surface, the light ray incident into the light guide member may be reflected to a region between the first total internal reflection surface and the second total internal reflection surface for propagation. Meanwhile, through the arrangement of the first end and the second end of the reflection surface, the reflected light rays may be fully paved in the light guide member, thereby realizing uniform arrangement of the light rays. In addition, the stray light caused by being reflected twice by the reflection surface may be filtered, thereby improving the optical performance of the optical device and improving the effect of the light guide member when realizing near-eye display.

In a specific feasible implementation, the optical device further includes a mat surface, where one end of the mat surface is connected to the first end of the reflection surface, and other end of the mat surface is fixedly connected to an end of the first total internal reflection surface close to the reflection surface, and is used to absorb a light ray reflected twice by the reflection surface.

In a specific feasible implementation, the mat surface is a black light absorption surface or a rough surface; where

in a case that the mat surface is the rough surface, a roughness of the rough surface is greater than a roughness of the reflection surface.

In a specific feasible implementation, the mat surface is arranged to be oblique with respect to the first total internal reflection surface, and the mat surface and the first total internal reflection surface form an obtuse angle.

In a specific feasible implementation, the optical device further includes a connection surface, where one end of the connection surface is connected to the second end of the reflection surface, and other end of the connection surface is connected to an end of the second total internal reflection surface close to the second end of the reflection surface.

In a specific feasible implementation, the optical device further includes a polyhedron structure, where the reflection surface, the mat surface, and the connection surface are surfaces of the polyhedron structure; and
the polyhedron structure is adhesively connected to the light guide member.

In a specific feasible implementation, a length direction of the first total internal reflection surface is a first direction;
a distance L between an endpoint of the first total internal reflection surface close to the reflection surface and the second end of the reflection surface in the first direction meets: $L > \left(H+d\right) * tan \left(2b+a\right) - k ;$ and $L < \frac{H ∗ \left(1+\frac{cos a}{cos \left(2b-a\right)}\right) - d}{tan \left(90-4b+a\right)} - \frac{H}{cos \left(2b-a\right)} ∗ sin a + 1 ;$
where H is a vertical distance between the second end of the reflection surface and the second total internal reflection surface;
b is an included angle between the reflection surface and the second total internal reflection surface;
a is an angle of one-half of the maximum incident angle;
d is a vertical distance between the first total internal reflection surface and the second total internal reflection surface; and
k and l are redundancy amounts.

In a specific feasible implementation, a length direction of the first total internal reflection surface is a first direction;
a distance L between an endpoint of the first total internal reflection surface close to the reflection surface and the second end of the reflection surface in the first direction meets: $L > \left(H+d\right) * tan \left(2b+ja\right) ;$ and $L < \frac{H ∗ \left(1+\frac{cos ja}{cos \left(2b-ja\right)}\right) - d}{tan \left(90-4b+ja\right)} - \frac{H}{cos \left(2b-ja\right)} ∗ sin ja ;$
H is a vertical distance between the second end of the reflection surface and the second total internal reflection surface;
b is an included angle between the reflection surface and the second total internal reflection surface;
a is an angle of one-half of the maximum incident angle;
d is a vertical distance between the first total internal reflection surface and the second total internal reflection surface; and
j is a coefficient, and 50%≤j≤1.

In a specific feasible implementation, a length direction of the first total internal reflection surface is a first direction;
a distance L between an endpoint of the first total internal reflection surface close to the reflection surface and the second end of the reflection surface in the first direction meets: $L > \left(H+d\right) * tan \left(2b+ja\right) - k ;$ and $L < \frac{H ∗ \left(1+\frac{cos ja}{cos \left(2b-ja\right)}\right) - d}{tan \left(90-4b+ja\right)} - \frac{H}{cos \left(2b-ja\right)} ∗ sin ja + 1 ;$
H is a vertical distance between the second end of the reflection surface and the second total internal reflection surface;
b is an included angle between the reflection surface and the second total internal reflection surface;
a is an angle of one-half of the maximum incident angle;
d is a vertical distance between the first total internal reflection surface and the second total internal reflection surface;
j is a coefficient, and 50%≤j≤1; and
k and l are redundancy amounts.

In a second aspect, a near-eye display apparatus is provided. The near-eye display apparatus includes a light ray generator and the above any one optical device, where
a light ray generated by the light ray generator is incident into a light guide member only at a light incident end.

In the above technical solution, by arranging the reflection surface to be oblique with respect to the first total internal reflection surface, the light ray incident into the light guide member may be reflected to a region between the first total internal reflection surface and the second total internal reflection surface for propagation. Meanwhile, through the arrangement of the first end and the second end of the reflection surface, the reflected light rays may be fully paved in the light guide member, thereby realizing uniform arrangement of the light rays. In addition, the stray light caused by being reflected twice by the reflection surface may be filtered, thereby improving the optical performance of the optical device and improving the effect of the light guide member when realizing near-eye display.

### BRIEF DESCRIPTION OF DRAWINGS

FIG. 1 is a schematic diagram of an application scenario of an optical device provided by an embodiment of the present disclosure.
FIG. 2 is a schematic diagram of an incident angle of an optical device provided by an embodiment of the present disclosure.
FIG. 3 is a schematic structural diagram of an optical device provided by an embodiment of the present disclosure.
FIG. 4 is a schematic diagram of propagation of the light ray in an optical device provided by an embodiment of the present disclosure.
FIG. 5 is another schematic diagram of propagation of the light ray in an optical device provided by an embodiment of the present disclosure.
FIG. 6 is another schematic diagram of propagation of the light ray in an optical device provided by an embodiment of the present disclosure.
FIG. 7 is another schematic diagram of propagation of the light ray in an optical device provided by an embodiment of the present disclosure.
FIG. 8 is a specific schematic structural diagram of an optical device provided by an embodiment of the present disclosure.
FIG. 9 is another specific schematic structural diagram of an optical device provided by an embodiment of the present disclosure.

### DETAILED DESCRIPTION

In order to make the objects, technical solutions, and advantages of the present disclosure clearer, the present disclosure will be further described in detail below with reference to the accompanying drawings.

It should be noted that, unless otherwise defined, technical terms or scientific terms used in one or more embodiments of the present disclosure should have normal meanings understood by persons with general skills in the field to which the present disclosure belongs. Terms "first," "second," and similar terms used in one or more embodiments of the present disclosure do not represent any order, quantity, or importance, but are only used to distinguish different components. Terms such as "including" or "containing" refer to that elements or objects appearing before the terms include illustrated elements or objects appearing after the terms and their equivalents, and do not exclude other elements or objects. Terms such as "connected" or "connecting" are not limited to physical or mechanical connections, but may include electrical connections, whether direct or indirect. "Upper", "lower", "left", "right", and the like are merely used to indicate a relative position relationship, and when an absolute position of a described object changes, the relative position relationship may also change correspondingly.

To facilitate understanding of the optical device provided in this embodiment of the present disclosure, an application scenario of the optical device is first described. The optical device provided in this embodiment of the present disclosure is applied to an AR or VR device. Currently, when the light rays propagate in an optical waveguide, the case in which the light rays are uneven is prone to occur, which affects a display effect of the AR or VR device. Based on this, an embodiment of the present disclosure provides an optical device to improve a propagation effect of the light ray in the optical device, thereby improving the display effect of the AR or VR device. The optical device is described in details with reference to specific drawings and embodiments below.

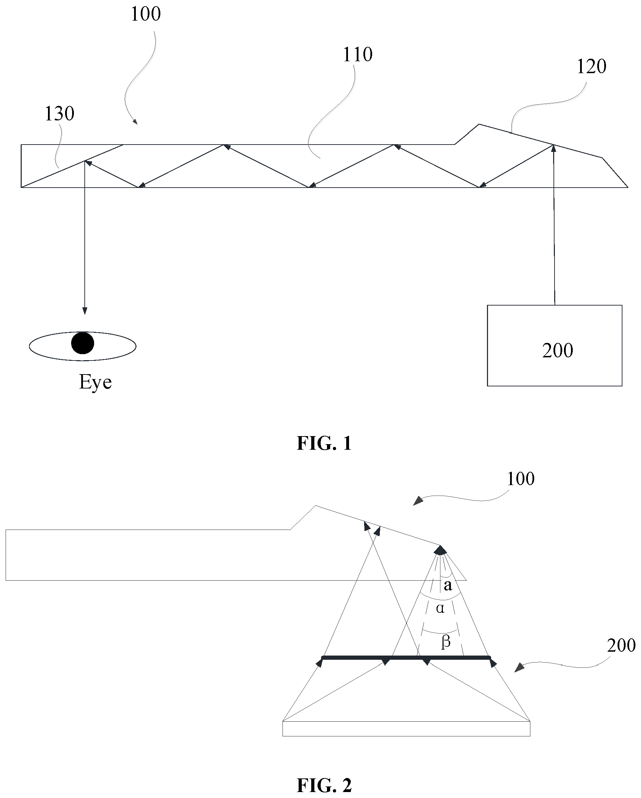

Referring to FIG.1, FIG. 1 shows an application scenario of an optical device provided by an embodiment of the present disclosure. When the optical scenario provided in this embodiment of the present disclosure is applied, a light ray emitted by a light ray generator 200 is incident into a light guide member 110 in the optical device 100, and the light ray is coupled to a region between two total internal reflection surfaces of the light guide member 110 through a reflection surface 120 of the optical device 100 for total internal reflection to propagate the light ray, and the light ray is coupled out of the light guide member 110 through a coupling-out member 130 in the light guide member 110, to propagate the light ray into an eye of the user. The light ray emitted by the light ray generator 200 may be a collimated image. For example, the light ray generator 200 is an optical collimator, or may be a light source generator assembly with a scanning property, which is not specifically limited in this embodiment of the present disclosure.

For ease of description of the optical device 100 provided in this embodiment of the present disclosure, a maximum incident angle is firstly defined. When the light ray generator 200 emits the light ray to the optical device 100, a maximum angle with which the light ray emitted by the light ray generator 200 is incident into the optical device 100 is defined as the maximum incident angle. For reference rays shown in FIG. 2, edge light rays emitted by the light ray generator 200 form a maximum incident angle with which the light rays is incident into the optical device 100, that is, the maximum incident angle is determined by the edge light rays of the light ray generator 200 (an angle α as shown in FIG. 2), and the angle α is an included angle formed by the two edge light rays. In addition, FIG. 2 further shows an incident angle, for example, an incident angle β illustrated by a dashed line as shown in FIG. 2, where β ≤ α. FIG. 2 further shows a half angle a of the maximum incident angle, where a = 1/2 α, that is, an angle obtained by dividing an angle bisector of the maximum incident angle.

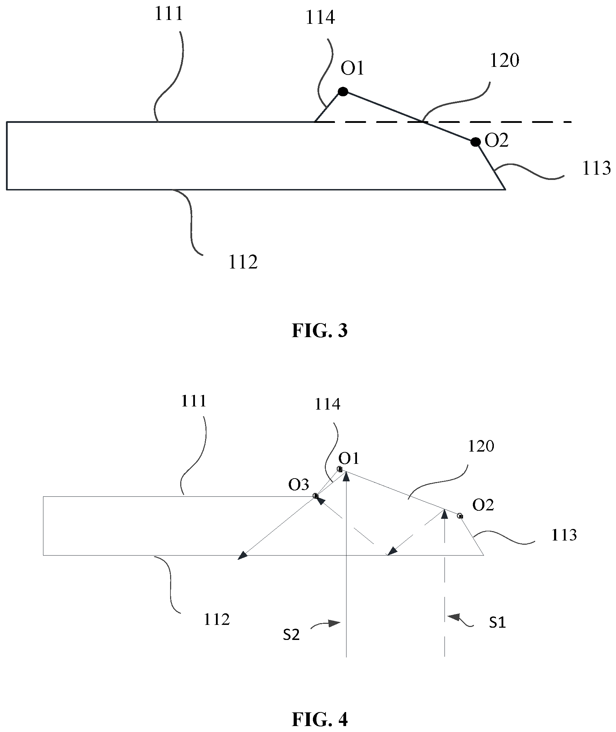

Referring FIG.3, FIG. 3 shows a schematic structural diagram of an optical device provided by an embodiment of the present disclosure. A main structure of the optical device provided in this embodiment of the present disclosure includes a light guide member 110 and a reflection surface 120. The light guide member 110 has a first total internal reflection surface 111 and a second total internal reflection surface 112 parallel to each other. As shown in FIG. 1, the second total internal reflection surface 112 is located on a side close to the light ray generator 200, and the first total internal reflection surface 111 is located on a side of the second total internal reflection surface 112 away from the light ray generator 200. When the light ray propagates in the light guide member 110, the light ray may be totally internally reflected between the first total internal reflection surface 111 and the second total internal reflection surface 112, to realize the propagation of the light ray.

When the light ray is incident, the light guide member 110 has a light incident end and a light exit end that are opposite to each other (not identified in FIG. 3, reference may be made to positions where the light ray is incident and the light ray is emergent in FIG. 1). When the light incident end and the light exit end are specifically arranged, the light incident end and the light exit end are arranged along a length direction of the light guide member 110, and are located at two opposite ends of the second total internal reflection surface 112. The light ray entering the light guide member 110 from the light incident end may be coupled to a region between the first total internal reflection surface 111 and the second total internal reflection surface 112 via the reflection surface 120 for the total internal reflection.

When the reflection surface 120 is specifically formed, a reflection layer may be directly coated on the light guide member 110, or the reflection layer may be attached to the light guide member 110 as the reflection surface 120. In this embodiment of the present disclosure, no specific limitation is made, and it is only necessary to couple the light ray to the region between the first total internal reflection surface 111 and the second total internal reflection surface 112.

When the reflection surface 120 is specifically arranged, the reflection surface 120 is arranged to be oblique with respect to the length direction of the light guide member 110, that is, the reflection surface 120 is arranged to be oblique with respect to the first total internal reflection surface 111. In addition, because the reflection surface 120 serves as a coupling-in device, the reflection surface 120 is arranged close to the light incident end, to ensure that the light ray may be reflected to a region between the first total internal reflection surface 111 and the second total internal reflection surface 112 via the reflection surface 120, to implement coupling-in of the light ray.

When the reflection surface 120 is oblique with respect to the first total internal reflection surface 111, the reflection surface 120 has a first end O1 and a second end O2 opposite to each other, where the first end O1 is a high end, and the second end O2 is a low end. Specifically, an intersection point exists between the reflection surface 120 and an extension line (shown by a dashed line in FIG. 3) of the first total internal reflection surface 111, and the first end O1 and the second end O2 of the reflection surface 120 are respectively located on two opposite sides of the extension line of the first total internal reflection surface 111. The first end O1 of the reflection surface 120 is located on a side of the first total internal reflection surface 111 away from the second total internal reflection surface 112, and it may also be understood as that the first end O1 protrudes outward of the first total internal reflection surface 111. The second end O2 of the reflection surface 120 serves as a lower end, and is located between the first total internal reflection surface 111 and the second total internal reflection surface 112, and the second end O2 of the reflection surface 120 is spaced from the second total internal reflection surface 112 by a set distance, that is, the second end O2 of the reflection surface 120 does not intersect with the second total internal reflection surface 112. Taking the placement direction of the light guide member 110 in FIG. 3 as a reference direction, the first end O1 and the second end O2 of the reflection surface 120 are arranged in a manner of left-high and right-low, so that the reflection direction of the reflection surface 120 faces the interior of the light guide member 110, and the light ray reflected by the reflection surface 120 may be incident into the light guide member 110.

In addition, the optical device further includes two exposed surfaces, and the two exposed surfaces are used to connect the reflection surface 120 with the two total internal reflection surfaces (the first total internal reflection surface 111 and the second total internal reflection surface 112). Exemplarily, one of the exposed surfaces is a mat surface 114, and the mat surface 114 is located between the first total internal reflection surface 111 and the reflection surface 120 and is used to connect the first total internal reflection surface 111 with the reflection surface 120. Exemplarily, one end of the mat surface 114 is connected to the first end O1 of the reflection surface 120, and the other end of the mat surface 114 is fixedly connected to the end of the first total internal reflection surface 111 close to the reflection surface 120, and the mat surface 114 is used to absorb the light ray reflected by the reflection surface 120 twice and incident to a region between the first end O1 of the reflection surface 120 and the first total internal reflection surface 111, that is, to absorb the light ray reflected twice by the reflection surface 120. The light ray reflected twice by the reflection surface 120 is stray light in the light guide member 110.

The mat surface 114 may be used to absorb the light ray reflected to a region between the first total internal reflection surface 111 and the reflection surface 120 by the reflection surface 120 in different manners. Exemplarily, the mat surface 114 is a black light absorption surface or a rough surface. When the mat surface 114 is a black light absorption surface, the light absorption performance of the black may be used to absorb the light ray, thereby reducing reflection of the light ray. When the mat surface 114 is a rough surface, a roughness of the rough surface is greater than a roughness of the reflection surface 120, to reduce the light ray incident to the region between the first total internal reflection surface 111 and the second total internal reflection surface 112 through diffuse reflection formed by the rough surface. It should be understood that "mat" in the present disclosure does not refer to eliminating the light ray, but reduces a case in which the light ray propagates to the region between the first total internal reflection surface 111 and the second total internal reflection surface 112 by different manners, such as absorbing the light ray, the diffuse reflection, transmission, etc.

The other exposed surface is located between the second total internal reflection surface 112 and the reflection surface 120, and serves as a connection surface 113 to connect the second total internal reflection surface 112 with the reflection surface 120. Exemplarily, one end of the connection surface 113 is connected to the second end O2 of the reflection surface 120, and the other end of the connection surface 113 is connected to an end of the second total internal reflection surface 112 close to the second end O2 of the reflection surface 120. The connection surface 113 may also be a mat surface, so as to reduce reflection of the light ray irradiated thereon, and to reduce the stray light entering between the first total internal reflection surface 111 and the second total internal reflection surface 112. When the connection surface 113 is the mat surface, reference may be made to the description of the mat surface in the above, which will not be repeated herein.

It should be understood that when the first total internal reflection surface 111, the second total internal reflection surface 112, and the reflection surface 120 are connected, it is not limited to the two exposed surfaces in the foregoing example, and other exposed surfaces may be used to implement the connection of the first total internal reflection surface 111, the second total internal reflection surface 112, and the reflection surface 120. For example, the first total internal reflection surface 111 and the reflection surface 120 are connected by two or three exposed surfaces; and the second total internal reflection surface 112 and the reflection surface 120 are connected by two or three exposed surfaces. For ease of description, in this embodiment of the present disclosure, an example in which the first total internal reflection surface 111, the second total internal reflection surface 112, and the reflection surface 120 are connected by the mat surface 114 and the connection surface 113 is taken for description.

For ease of description, the intersection point of the mat surface 114 and the first total internal reflection surface 111 is defined as a point O3, and the intersection point of the reflection surface 120 and the connection surface 113 is defined as a point O2.

When the reflection surface 120 couples the light ray to the region between the first total internal reflection surface 111 and the second total internal reflection surface 112, in order to improve the uniformity of the light rays, the reflection surface 120 needs to cooperate with the first total internal reflection surface 111 and the second total internal reflection surface 112. Specifically, the first end and the second end of the reflection surface 120 meet that: for the light rays entering the optical device 100 via the light incident end with the incident angle, the light rays are reflected by the reflection surface 120 once to the second total internal reflection surface 112 and thus are fully paved in the light guide member 111, to realize total internal reflection propagation. The incident angle may refer to the angle β in FIG. 2. In the embodiment of the present disclosure, the incident angle is at least 50% of the maximum incident angle. For example, β may be 50% of the maximum incident angle, 70% of the maximum incident angle, 90% of the maximum incident angle, or 100% of the maximum incident angle. When the light ray with the above incident angle is coupled to a region between the first total internal reflection surface 111 and the second total internal reflection surface 112 via the reflection surface 120, the light rays are fully paved in the light guide member 110.

Exemplarily, taking the light ray propagation shown in FIG. 4 as an example, FIG. 4 shows a schematic diagram of coupling the light ray to the region between the first total internal reflection surface 111 and the second total internal reflection surface 112 via the reflection surface 120.

When the light ray perpendicular to the second total internal reflection surface 112 is incident into the optical device 100, the light ray has a certain aperture, and when the light ray is incident onto the reflection surface 120, edge light rays with a limited aperture may occur, for example, a dotted line with an arrow and a solid line with an arrow respectively represent edge light rays in the light rays. For ease of description, the edge light ray indicated by the dashed line with an arrow is named as a first edge light ray S1, and the edge light ray indicated by the solid line with an arrow is named as a second edge light ray S2.

First, the first edge light ray S1 is described. The first edge light ray S1 is incident to a position of the reflection surface 120 close to the second end O2, and is reflected by the reflection surface 120 to the second total internal reflection surface 112, and then is reflected by the second total internal reflection surface 112 to the intersection point (the point O3) of the first total internal reflection surface 111 and the mat surface 114. At this time, the point O3, as an endpoint of the first total internal reflection surface 111, has a total internal reflection property. The first edge light ray S1 is reflected by the first total internal reflection surface 111 at the point O3 to the second total internal reflection surface 112, and propagates between the first total internal reflection surface 111 and the second total internal reflection surface 112 in a total internal reflection manner.

The second edge light ray S2 is incident to a position of the reflection surface 120 close to the first end O1, then reflected by the reflection surface 120 to the intersection point (the point O3) of the first total internal reflection surface 111 and the mat surface 114, continues to propagate to the second total internal reflection surface 112, and continues to propagate between the first total internal reflection surface 111 and the second total internal reflection surface 112 in the total internal reflection manner.

It can be seen from the above description that, when the first edge light ray S1 and the second edge light ray S2 enter, after propagating to the point O3, the region between the first total internal reflection surface 111 and the second total internal reflection surface 112 for the total internal reflection, the first edge light ray S1 and the second edge light ray S2 substantially overlap, while other light rays located between the first edge light ray S1 and the second edge light ray S2 are also located between the first edge light ray S1 and the second edge light ray S2 when propagating in the light guide member 110. In this case, it can be considered that the light rays are substantially completely filled inside the light guide member 110, and if the illuminance of the light rays on the second total internal reflection surface 112 is detected, the entire second total internal reflection surface 112 is substantially illuminated by the coupling-in light rays. This state is also referred to as that the light rays are fully paved in the light guide member 110, thereby improving the uniformity of the light rays during propagation in the light guide member 110.

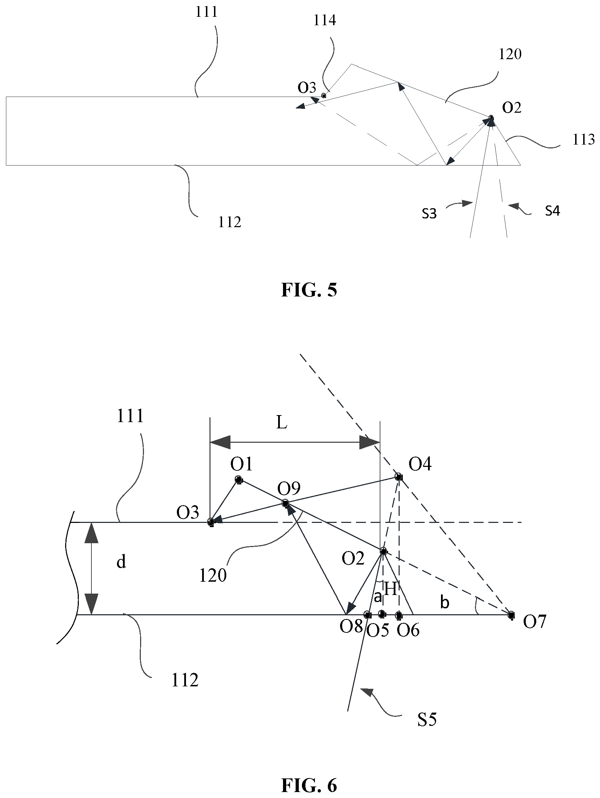

When the light rays propagate in the optical device, on one hand, the uniformity of the light rays during propagation needs to be met, and on the other hand, the stray light needs to be eliminated, to improve the effect of the light guide member 110 during propagation of the light rays. The stray light refers to the light rays that do not meet the total internal reflection requirement when the light rays propagate between the first total internal reflection surface 111 and the second total internal reflection surface 112. Referring to FIG. 5, FIG. 5 shows two different light rays, which are the light ray S3 and the light ray S4 respectively, where the light ray S3 is stray light. During propagation of the light ray, the light ray S3 is a light ray that enters the region between the first total internal reflection surface 111 and the second total internal reflection surface 112 after being reflected twice by the reflection surface 120, that is, the light ray S3 is reflected by the reflection surface 120 to the second total internal reflection surface 112, then is reflected by the second total internal reflection surface 112 to the reflection surface 120, and is reflected by the reflection surface 120 to the region between the first total internal reflection surface 111 and the second total internal reflection surface 112. The light ray S4 is a light ray that enters, after being reflected once by the reflection surface 120, the region between the first total internal reflection surface 111 and the second total internal reflection surface 112. It can be seen by comparing the light ray S3 with the light ray S4 that the reason for the generation of the stray light is that the light ray is reflected multiple times by the reflection surface 120, so that the light ray does not meet, after entering the region between the first total internal reflection surface 111 and the second total internal reflection surface 112, the requirement of the total internal reflection angle (referring to the light ray S3 and the light ray S4), and this light ray becomes the stray light.

Referring to the light ray S3 and the light ray S4, when the incident point of the light ray S3 is close to the intersection point O2 of the reflection surface 120 and the connection surface 113, a case similar to FIG. 5 that the light ray S3 is reflected by the reflection surface 120 for multiple times (reflected twice in FIG. 5) may easily occur. In this case, the reflected light ray will form the stray light when entering the region between the first total internal reflection surface 111 and the second total internal reflection surface 112. Therefore, the intersection point O3 of the mat surface 114 and the first total internal reflection surface 111 needs to be low enough to eliminate, by the mat surface 114, a part of the stray light caused by being reflected twice (the twice-reflection and the multiple-reflection in the present disclosure are both referred to as being reflected by the reflection surface 120 twice or multiple times), and meanwhile, the intersection point O2 of the reflection surface 120 and the connection surface 113 also has a certain height, to ensure that the stray light does not cross the boundary between the first total internal reflection surface 111 and the mat surface 114 to enter the light guide member 110.

Therefore, when the reflection surface 120 provided by the embodiment of the present disclosure is arranged, the first end and the second end of the reflection surface 120 should meet that: for edge light rays obliquely incident to the second end O2 of the reflection surface 120 with the incident angle, the edge light rays are reflected by the reflection surface 120 twice and incident to a region between the first end O1 of the reflection surface 120 and the first total internal reflection surface 111. That is, after the light ray with the incident angle is reflected multiple times by the reflection surface 120, the stray light may not enter the region between the first total internal reflection surface 111 and the second total internal reflection surface 112 through the arrangement of the reflection surface 120, so as to filter out the stray light. The specific filtering manner is absorption or diffuse reflection through the mat surface, as the light-eliminating manner mentioned above.

It can be seen from the above description that the optical device provided by the embodiment of the present disclosure may reflect the light ray incident into the light guide member 110 to the region between the first total internal reflection surface 111 and the second total internal reflection surface 112 for propagation by arranging the reflection surface 120 to be oblique with respect to the first total internal reflection surface 111. In addition, considering the propagation effect of the light ray in the optical device, through the arrangement of the first end O1 and the second end O2 of the reflection surface 120, the reflected light rays may be fully paved in the light guide member 110, thereby realizing uniform arrangement of the light rays. In addition, the stray light caused by being reflected by the reflection surface 120 multiple times may be filtered, thereby improving the optical performance of the optical device and improving the effect of the light guide member 110 when realizing near-eye display.

When the first end O1 and the second end O2 of the reflection surface 120 are specifically arranged, the first end O1 and the second end O2 are specifically related to parameters such as a thickness of the light guide member 110, an oblique angle of the reflection surface 120, the intersection point of the first total internal reflection surface 111 and the mat surface 114, etc.

Referring to FIG. 6, some parameters associated with the reflection surface 120 are defined in FIG. 6. The parameters in FIG. 6 are firstly described. The point O2 is a second endpoint of the reflection surface 120; d is a vertical distance between the first total internal reflection surface 111 and the second total internal reflection surface 112; H is a vertical distance between the second end O2 of the reflection surface 120 and the second total internal reflection surface 112; b is an included angle between the reflection surface 120 and the second total internal reflection surface 112; a is an angle of one-half of the maximum incident angle, referring to the related description in FIG. 2; L is a distance between the endpoint of the first total internal reflection surface 111 close to the reflection surface 120 and the second end O2 of the reflection surface 120 in a first direction. The first direction is a length direction of the light guide member 110, that is, L is the distance between the intersection point O3 of the first total internal reflection surface 111 and the mat surface 114 and the second end (the point O2) of the reflection surface 120 along the first direction.

When the reflection surface 120 is specifically arranged, L meets: $L > \left(H+d\right) * tan \left(2b+a\right) - k ;$ and $L < \frac{H ∗ \left(1+\frac{cos a}{cos \left(2b-a\right)}\right) - d}{tan \left(90-4b+a\right)} - \frac{H}{cos \left(2b-a\right)} ∗ sin a + 1 ,$ where k and l are redundancy amounts.

Continuing to refer to FIG. 6, when the light ray S5 is incident into the light guide member 110, the intersection point of the light ray S5 and the second total internal reflection surface 112 is O8, and after entering the light guide member 110, the light ray S5 irradiates to the second end O2 of the reflection surface 120, then is reflected by the reflection surface 120 to the second total internal reflection surface 112, then is reflected by the second total internal reflection surface 112 to the reflection surface 120 (the intersection point of the light ray S5 and the reflection surface is O9), and then is secondarily reflected by the reflection surface 120 to the intersection point O3 of the first total internal reflection surface 111 and the mat surface 114. In order to prevent the light ray from being incident into the region between the first total internal reflection surface 111 and the second total internal reflection surface 112, it should be ensured that the arranged reflection surface 120 meets that: the light ray is located between O1 and O3, that is, the mat surface 114 may absorb the light ray after the light ray S5 is reflected twice.

For ease of understanding, some reference lines are introduced according to a mirror image principle of the light ray. The reflected light ray for the light ray S5 is mirrored with the reflection surface 120 as a reference to obtain a corresponding dotted line. In addition, the second total internal reflection surface 112 is also mirrored with the reflection surface 120 as a reference, and the reflection surface 120, the second total internal reflection surface 112, and a mirror image surface for the second total internal reflection surface 112 are extended to intersect, and the intersection point is O7. The intersection point of the mirror light ray for the light ray S5 and the mirror surface for the second total internal reflection surface 112 is O4. Two auxiliary reference lines, L1 and L2, are constructed, where L1 is a vertical line segment (the line segment O2O5, where O5 is the intersection point of L1 and the second total internal reflection surface 112) from the second endpoint O2 of the reflection surface 120 to the second total internal reflection surface 112, and its length is H; L2 is a vertical line segment (the line segment O4O6, where O6 is the intersection point of L2 and the second total internal reflection surface 112) from the intersection point O4 to the second total internal reflection surface 112, and its length is C. The length of the light ray S5 propagating in the light guide member 110 to the second end O2 of the reflection surface 120 is A (the length of the line segment O2O8). The length of the light ray S5 reflected firstly by the reflection surface 120 to the second total internal reflection surface 112 is B, that is, the length of the line segment O2O4 is B (according to the mirror image principle). The length of the light ray S5 reflected secondary by the reflection surface 120 to O3 is D, that is, the line segment O3O9. The following formulas may be obtained according to the reflection angle relationship and the mirror image relationship of the light ray: $A = \frac{B ∗ cos \left(2b-a\right)}{cos a} ,$ $B = \frac{H}{cos \left(2b-a\right)} ,$ $C = \left(A+B\right) ∗ cos a ,$ $D = \frac{\left(C-d\right)}{tan \left(90-4b+a\right)} ,$ and $L = D - B * sin a ,$

The formula 1 and the formula 2 may be substituted into the formula 3 to obtain: $\begin{matrix}C = \left(A+B\right) ∗ cos a \\ = \left(\frac{B ∗ cos \left(2b-a\right)}{cos a}+B\right) ∗ cos a \\ = H + \frac{H}{cos \left(2b-a\right)} ∗ cos a \\ = H ∗ \left(1+\frac{cos a}{cos \left(2b-a\right)}\right) .\end{matrix}$

The formula 4 may be substituted into the formula 5 to obtain: $L = \frac{\left(C-d\right)}{tan \left(90-4b+a\right)} - B * sin a ;$ $= \frac{H ∗ \left(1+\frac{cos a}{cos \left(2b-a\right)}\right) - d}{tan \left(90-4b+a\right)} - \frac{H}{cos \left(2b-a\right)} ∗ sin a .$

It can be seen from the above description that when the light ray after reflecting twice the light ray S5 is exactly reflected to the intersection point O3 of the first total internal reflection surface 111 and the mat surface 114, this is a critical state in which the light ray S5 after being reflected twice may enter the region between the first total internal reflection surface 111 and the second total internal reflection surface 112. A length of L calculated by using the above formula is a length of L corresponding to the critical state. To eliminate the stray light caused by being reflected twice, when L is set, L meets $L < \frac{H ∗ \left(1+\frac{cos a}{cos \left(2b-a\right)}\right) - d}{tan \left(90-4b+a\right)} - \frac{H}{cos \left(2b-a\right)} ∗ sin a$. Considering some processing errors, some redundancy is involved, and therefore, the obtained formula is: $L < \frac{H ∗ \left(1+\frac{cos a}{cos \left(2b-a\right)}\right) - d}{tan \left(90-4b+a\right)} - \frac{H}{cos \left(2b-a\right)} ∗ sin a + l$. l is redundant, for example, 1 may be between 0 mm and 0.3 mm. For example, l is different values, such as 0.1, 0.2, 0.3, etc.

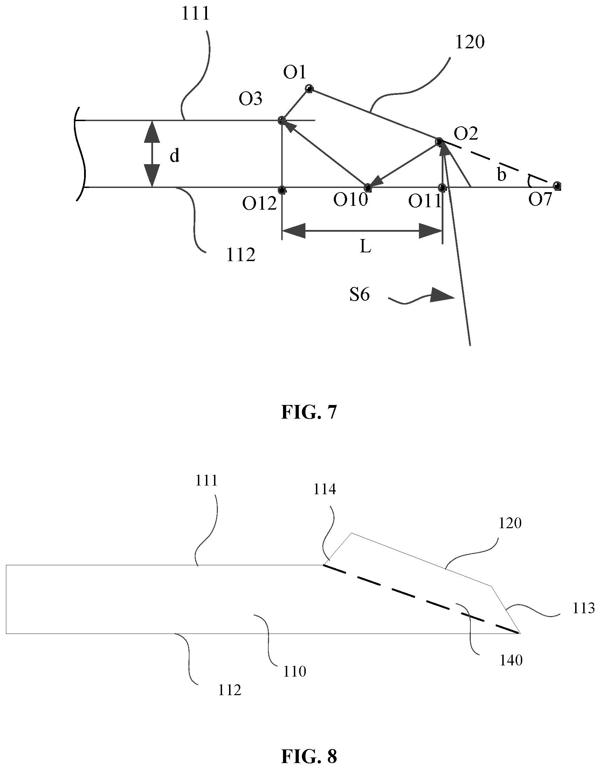

Referring to FIG. 7, in order to ensure that the light rays can be fully paved in the entire light guide member 110, when the light rays enter the light guide member 110, for example when the coupling-in light rays are obliquely incident to the light guide member 110 with another angle, L meets L>(H+d)*tan(2b+a)-k, when L is set.

In FIG. 7, the reflection surface 120 and the second total internal reflection surface 112 extend to intersect, the intersection point is O7, and the included angle between the reflection surface 120 and the second total internal reflection surface 112 is b. The incident angle of the light ray S6 when irradiating to the reflection surface 120 is a (in FIG. 6 and FIG. 7, although the angles of the light ray S5 and the light ray S6 are both a, the oblique directions of the light ray S5 and the light ray S6 are different), and after being incident into the light guide member 100, the light ray S6 is reflected by the reflection surface 120 to the second total internal reflection surface 112 (the intersection point is O10). In addition, two perpendicular lines are introduced at points O3 and O2, and the intersection points of the two perpendicular lines and the second total internal reflection surface 112 are O12 and O11, respectively. In the first direction, L may be divided into two line segments O11O10 and O12O10.$LenghtofO 11 O 10 = H * tan \left(2b+a\right) ,$ and length of O10O12 = d*tan(2b+a);
and then, L= (H+d)*tan(2b+a).

In order to ensure that the light ray may be incident into the first total internal reflection surface 111 and the second total internal reflection surface 112, L meets: L>(H+d)*tan(2b+a).

Considering some processing errors, some redundancy is involved, and therefore, the obtained formula is: L>(H+d)*tan(2b+a)-k, where k is processing redundancy. Exemplarily, k may be between 0 mm and 0.3 mm. For example, k is different values, such as 0.1, 0.2, 0.3, etc.

In another optional solution, considering requirements of different maximum incident angles, when all light rays with all angles of the maximum incident angles are not required to meet eliminating the stray light and being fully paved in the light guide member, the corresponding design meets the following conditions: $L > \left(H+d\right) * tan \left(2b+ja\right) ;$ and $L < \frac{H ∗ \left(1+\frac{cos ja}{cos \left(2b-ja\right)}\right) - d}{tan \left(90-4b+ja\right)} - \frac{H}{cos \left(2b-ja\right)} ∗ sin ja ;$ where j is a coefficient, and 50%≤j≤1. For example, j may be different ranges, such as 50%, 60%, 70%, 80%, 90%, 1, etc. Other parameters may refer to related descriptions in FIG. 6 and FIG. 7.

In another variation scheme, both the redundancy and the incident angle may be considered on the basis of the previous variation scheme. The corresponding formula may be transformed into: $L > \left(H+d\right) * tan \left(2b+ja\right) - k ;$ and $L < \frac{H ∗ \left(1+\frac{cos ja}{cos \left(2b-ja\right)}\right) - d}{tan \left(90-4b+ja\right)} - \frac{H}{cos \left(2b-ja\right)} ∗ sin ja + l ;$ where j is a coefficient, and 50%≤j≤1, and k and l are redundancy amounts. Other parameters may refer to related descriptions in FIG. 6 and FIG. 7.

It can be seen from the solutions of the above different examples that, by arranging the reflection surface 120, the light rays incident into the optical device with the incident angle (at least 50% of the maximum incident angle) may be fully paved in the optical device and the stray light may be reduced, thereby improving the propagation effect of the light rays in the optical device and improving the display effect of the optical device when applied to the AR device or the VR device.

In a specific possible implementation, when the mat surface 114 is specifically arranged, the mat surface 114 is arranged to be oblique with respect to the first total internal reflection surface 111, and the mat surface 114 and the first total internal reflection surface 111 form an obtuse angle. That is, when the mat surface 114 is arranged, the mat surface 114 may be oblique with respect to both the first total internal reflection surface 111 and the reflection surface 120, or perpendicular to one of the both. When arranging in this manner, the reflection surface 120 with a shorter length may be used to meet requirements of the propagation of the light ray. Of course, it should be understood that even if a reflection surface 120 with a shorter length is used, the length of the reflection surface 120 should meet that all light rays incident into the light guide member 110 may irradiate to the reflection surface 120 and be coupled through the reflection surface 120.

In an optional solution, when the connection surface 113 is specifically arranged, the connection surface 113 is arranged to be oblique with respect to the second total internal reflection surface 112, and an included angle between the connection surface 113 and the reflection surface 120 is an obtuse angle. That is, the connection surface 113 is oblique towards the outer side of the light guide member 110, so that when the light ray is incident into the light guide member 110 with an oblique angle, the light ray may irradiate to the second end of the reflection surface 120, which may thereby reduce the length of the reflection surface 120.

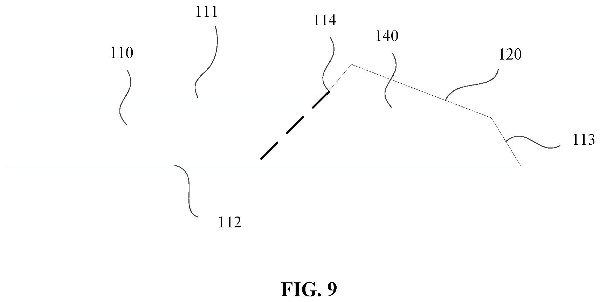

In a specific feasible implementation, the optical device further includes a polyhedron structure, the reflection surface, the mat surface, and the connection surface are surfaces of the polyhedron structure, and the polyhedron structure is adhesively connected to the light guide member to facilitate preparation of the optical device. Different manners may be used to perform the adhesion specifically. As shown in FIGS. 8 and 9, the reflection surface 120, the mat surface 114, and the connection surface 113 are prepared in a polyhedron structure 140 made of the same material as the light guide member 110. As indicated by the dashed line shown in FIG. 8, the entire optical device is divided into the light guide member 110 and the polyhedron structure 140. The light guide member 110 and the polyhedron structure 140 are made of the same material, the first total internal reflection surface 111 and the second total internal reflection surface 112 are prepared in the light guide member 110, and the reflection surface 120, the mat surface 114, and the connection surface 113 are prepared in the polyhedron structure 140. When the optical device is formed, the light guide member 110 and the polyhedron structure 140 are adhesively fixed, so that the reflection surface 120, the mat surface 114, and the connection surface 113 are respectively connected to the first total internal reflection surface 111 and the second total internal reflection surface 112. Similarly, referring to the dashed line in FIG. 9, FIG. 9 shows another division manner of the light guide member 110 and the polyhedron structure 140, the principle of which is the same as that shown in FIG. 8, which will be not repeated herein.

Of course, in addition to the above manner, the reflection surface 120, the mat surface 114, and the connection surface 113 may also be arranged in other manners, which will be not illustrated one by one herein.

An embodiment of the present disclosure further provides a near-eye display apparatus including a light ray generator and the above any one optical device, where
a light ray generated by the light ray generator is incident into the light guide member 110 only at a light incident end.

In the above technical solution, by arranging the reflection surface 120 to be oblique with respect to the first total internal reflection surface 111, the light ray incident into the light guide member 110 may be reflected to a region between the first total internal reflection surface 111 and the second total internal reflection surface 112 for propagation. Meanwhile, through the arrangement of the first end and the second end of the reflection surface 120, the reflected light rays may be fully paved in the light guide member 110, thereby realizing uniform arrangement of the light rays. In addition, the stray light caused by being reflected twice by the reflection surface 120 may be filtered, thereby improving the optical performance of the optical device and improving the effect of the light guide member 110 when realizing near-eye display.

It is intended that one or more embodiments of the present disclosure cover all such alternatives, modifications, and variations as fall within the broad scope of the appended claims. Therefore, any omission, modification, alternatives, improvement, and the like made within the spirit and principle of one or more embodiments of the present disclosure shall be included within the protection scope of the present disclosure.

The above description is only specific implement manner of the present disclosure, and the protection scope of the present disclosure is not limited thereto. Any alteration or substitution that can be easily conceived by any those skilled in the art within the technical scope disclosed by the present disclosure shall fall within the protection scope of the present disclosure. Therefore, the protection scope of the present disclosure shall be subject to the protection scope of the claims.

## Claims

1. An optical device, comprising a light guide member and a reflection surface;
wherein the light guide member comprises a first total internal reflection surface and a second total internal reflection surface that are parallel to each other, wherein the second total internal reflection surface has a light incident end and a light exit end that are opposite to each other;
the reflection surface is arranged to be oblique with respect to the first total internal reflection surface and close to the light incident end;
the reflection surface has a first end located on a side of the first total internal reflection surface away from the second total internal reflection surface and a second end located between the first total internal reflection surface and the second total internal reflection surface, and the second end of the reflection surface is spaced from the second total internal reflection surface by a set distance;
the first end and the second end of the reflection surface meet that:
for light rays entering the optical device via the light incident end with an incident angle, the light rays are reflected by the reflection surface once to the second total internal reflection surface and thus fully paved in the light guide member, to realize total internal reflection propagation, wherein the incident angle is at least 50% of a maximum incident angle; and
for edge light rays obliquely incident to the second end of the reflection surface with the incident angle, the edge light rays are reflected by the reflection surface twice and incident to a region between the first end of the reflection surface and the first total internal reflection surface.

2. The optical device of claim 1, further comprising a mat surface, wherein one end of the mat surface is connected to the first end of the reflection surface, and other end of the mat surface is fixedly connected to an end of the first total internal reflection surface close to the reflection surface, and is used to absorb a light ray reflected twice by the reflection surface.

3. The optical device of claim 2, wherein the mat surface is a black light absorption surface or a rough surface; and wherein
in a case that the mat surface is the rough surface, a roughness of the rough surface is greater than a roughness of the reflection surface.

4. The optical device of claim 2, wherein the mat surface is arranged to be oblique with respect to the first total internal reflection surface, and the mat surface and the first total internal reflection surface form an obtuse angle.

5. The optical device of claim 2, further comprising a connection surface, wherein one end of the connection surface is connected to the second end of the reflection surface, and other end of the connection surface is connected to an end of the second total internal reflection surface close to the second end of the reflection surface.

6. The optical device of claim 5, further comprising a polyhedron structure, wherein the reflection surface, the mat surface, and the connection surface are surfaces of the polyhedron structure; and
the polyhedron structure is adhesively connected to the light guide member.

7. The optical device of any one of claims 1 to 6, wherein a length direction of the first total internal reflection surface is a first direction;
a distance L between an endpoint of the first total internal reflection surface close to the reflection surface and the second end of the reflection surface in the first direction meets:
L>(H+d)*tan(2b+a)-k; and $L < \frac{H ∗ \left(1+\frac{cos a}{cos \left(2b-a\right)}\right) - d}{tan \left(90-4b+a\right)} - \frac{H}{cos \left(2b-a\right)} ∗ sin a + l$; wherein
H is a vertical distance between the second end of the reflection surface and the second total internal reflection surface;
b is an included angle between the reflection surface and the second total internal reflection surface;
a is an angle of one-half of the maximum incident angle;
d is a vertical distance between the first total internal reflection surface and the second total internal reflection surface; and
k and l are redundancy amounts.

8. The optical device of any one of claims 1 to 6, wherein a length direction of the first total internal reflection surface is a first direction;
a distance L between an endpoint of the first total internal reflection surface close to the reflection surface and the second end of the reflection surface in the first direction meets: $L > \left(H+d\right) * tan \left(2b+ja\right) ;$ and $L < \frac{H ∗ \left(1+\frac{cos ja}{cos \left(2b-ja\right)}\right) - d}{tan \left(90-4b+ja\right)} - \frac{H}{cos \left(2b-ja\right)} ∗ sin ja ;$
H is a vertical distance between the second end of the reflection surface and the second total internal reflection surface;
b is an included angle between the reflection surface and the second total internal reflection surface;
a is an angle of one-half of the maximum incident angle;
d is a vertical distance between the first total internal reflection surface and the second total internal reflection surface; and
j is a coefficient, and 50%≤j≤1.

9. The optical device of any one of claims 1 to 6, wherein a length direction of the first total internal reflection surface is a first direction;
a distance L between an endpoint of the first total internal reflection surface close to the reflection surface and the second end of the reflection surface in the first direction meets: $L > \left(H+d\right) * tan \left(2b+ja\right) - k ;$ and $L < \frac{H ∗ \left(1+\frac{cos ja}{cos \left(2b-ja\right)}\right) - d}{tan \left(90-4b+ja\right)} - \frac{H}{cos \left(2b-ja\right)} ∗ sin ja + l ;$
H is a vertical distance between the second end of the reflection surface and the second total internal reflection surface;
b is an included angle between the reflection surface and the second total internal reflection surface;
a is an angle of one-half of the maximum incident angle;
d is a vertical distance between the first total internal reflection surface and the second total internal reflection surface;
j is a coefficient, and 50%≤j≤1; and
k and l are redundancy amounts.

10. A near-eye display apparatus, comprising a light ray generator and the optical device of any one of claims 1 to 9, wherein
a light ray generated by the light ray generator is incident into a light guide member only at a light incident end.
